# EUROPÄISCHE PATENTSCHRIFT

(11) **EP 1 388 289 B1**
(45) Veröffentlichungstag und Bekanntmachung des Hinweises auf die Patenterteilung: **06.09.2006**
(21) Anmeldenummer: 03016848.8
(22) Anmeldetag: 24.07.2003
(51) Int. Cl.: A22C 13/00

(54) **Leichtschälbare Wursthülle aus faserverstärktem Cellulosehydrat mit Trennbeschichtung auf der Innnenseite**
Easy to peel sausage casing made from cellulose hydrate with release coating on the inside
Enveloppe pelable pour saucisses à base d'hydrate de cellulose comportant un revêtement antiadhésif

(30) Priorität: 06.08.2002 DE 10235966
(43) Veröffentlichungstag der Anmeldung: 11.02.2004
(73) Patentinhaber: CaseTech GmbH & Co. KG, 29656 Walsrode (DE)
(72) Erfinder: Blumenberg, Klaus, Dr., 29664 Walsrode (DE); Henze-Wethkamp, Heinrich, Dr., 29664 Walsrode (DE); Neuschulz, Willi, 29683 Bad Fallingbostel (DE)
(74) Vertreter: Lütjens, Henning

(56) Entgegenhaltungen:
- EP-A- 0 468 284
- EP-A- 0 676 143
- DE-A- 2 853 269
- DE-A- 19 916 121
- US-A- 4 596 727

## Beschreibung

Die Erfindung betrifft eine Wursthülle auf Basis von faserverstärktem Cellulosehydrat, die geringe Haftung zum Füllgut aufweist, sowie deren Verwendung.

Wursthüllen, die auf ihrer Innenseite eine Beschichtung zur Verringerung der Haftung zur Wurst aufweisen sind bereits beschrieben worden.

So ist gemäß DE-A-1 923 607 eine Beschichtung aus 3 Emulsionskomponenten A, B und C wirksam zur Verringerung der Haftung zum Brät und zur Vermeidung von Fettseparation. Dabei ist die Komponente A eine aliphatische Verbindung, unter anderen ein aliphatisches dimeres Keten oder ein aliphatischer Metallkomplex, zum Beispiel Stearat-Chrom(III)-Chlorid-Komplexverbindung. Komponente B ist eine aliphatische Verbindung mit einer HLB-Zahl von 1 bis 10 und die Komponente C ein Polyoxyether eines höheren aliphatischen Alkohols mit einer HLB-Zahl größer 7 und einer definierten Oberflächenspannung von kleiner als 50 dyn/cm².

In der DE-A-3 447 026 wird eine Beschichtung zur Verbesserung der Abschälbarkeit der Cellulosehülle vorgeschlagen, die eine Chrom -Fettsäure-Komplexverbindung und ein Öl, insbesondere ein Dimethylpolysiloxan enthält. Ein weiterer möglicher Zusatz zur Steigerung des Trenneffektes ist ein Celluloseether, unter anderen Hydroxyethylcellulose.

In der DE-A-2 853 269 wird eine Cellulosehülle mit einer inneren Beschichtung aus einem wasserlöslichen Celluloseether, unter anderen Hydroxyethylcellulose und einem Polyamin-Polyamid-Epichlorhydrinharz bzw. einem Melaminformaldehydharz beansprucht. Letztere Verbindungen werden üblicherweise zur Verstärkung der Haftung eingesetzt und so ist als Aufgabe der genannten Erfindung die Einstellung einer guten Haftung der Cellulosehülle zur Nahrungsmittelmasse definiert.

In der DE-A 19 916 121 ist eine Nahrungsmittelhülle auf Basis von Cellulosehydrat beschrieben, die auf ihrer inneren Oberfläche mit einer Trennpräparation imprägniert ist. Diese Präparation enthält eine reaktive Hydrophobierkomponente und eine nicht reaktive Trennkomponente sowie eine Öl- und/oder Lecithin-Komponente. Dabei ist die reaktive Hydrophobierkomponente bevorzugt ein Chromfettsäurekomplex, ein Diketen mit langkettigen Alkylresten, ein Alkylisocyanat oder ein reaktives Silicon. Die nicht-reaktive Trennkomponente ist bevorzugt ein Celluloseether, unter anderen Hydroxyethylcellulose. Die Komponenten sollen in synergistischer Weise einen Trenneffekt bewirken.

In der EP-A-0 676 143 ist eine Nahrungsmittelhülle auf Basis von Cellulosehydrat offenbart, die innen imprägniert ist mit einem Gemisch, dass ein Haft und eine Trennkomponente enthält. Dabei kann die Haftkomponente ein Polyamin-Polyamid-Epichlorhydrinharz sein und das Trennmittel ein Chromfettsäurekomplex oder ein Diketen mit langkettigen, fettähnlichen Substituenten. Das Ziel ist hier die Einstellung einer definierten, nicht zu schwachen Haftung für die Herstellung von Rohwurst, die durch Wasserabgabe schrumpft, wobei sich die Hülle nicht ablösen darf.

Die genannten Beschichtungen bewirken zwar eine Verbesserung der Abschälbarkeit, können aber die starken Haftungskräfte zwischen Cellulosehülle und Wurst, insbesondere bei mageren Wurstsorten nicht so weit reduzieren, dass ein Schälen ohne nennenswerten Kraftaufwand ermöglicht wird.

Es ist deshalb Aufgabe dieser Erfindung, für eine Wursthülle auf Basis von faserverstärktem Cellulosehydrat eine Innenbeschichtung zu finden, die ein sehr leichtes Abschälen (easy-peel) der Wursthülle von der Wurstmasse ermöglicht.

Gegenstand der Erfindung ist daher eine schlauchförmige Wursthülle auf Basis von faserverstärktem Cellulosehydrat, die auf der inneren Oberfläche eine Beschichtung zur leichteren Abtrennbarkeit von der Wurstmasse aufweist, welche aus den vier Wirkstoffkomponenten Chromfettsäurekomplex, fettähnliches Diketen, Polyamin-Epichlorhydrinharz und Celluloseether besteht.

Die Wursthülle der Erfindung mit der Beschichtung auf der inneren Oberfläche zeigt eine deutlich reduzierte Haftung zur Wurstmasse, auch easy-peel Effekt genannt, bei Kombination der vier Komponenten Chromfettsäurekomplex, fettähnliches Diketen, Polyamin-Polyamid-Epichlorhydrinharz und Celluloseether. Diese Wirkung der vier Komponenten ist besonders überraschend, weil die Haftung jeweils deutlich ansteigt, wenn man eine der Komponenten aus der Beschichtung weglässt. Zusammen bewirken die vier Komponenten in der Beschichtung einen synergistischen Effekt geringer Haftung der Hülle zur Wurstmasse. Bekannt ist die haftungsverstärkende Wirkung von Polyamin-Polyamid-Epichlorhydrinharz in Innenbeschichtungen von Wursthüllen. Überraschend und nicht vorhersehbar ist deshalb die Steigerung der haftungsreduzierenden Wirkung in der Kombination mit Chromfettsäurekomplex, fettähnlichem Diketen und Hydroxyethylcellulose.

Die Wursthülle besteht aus einem Schlauch auf Basis von Cellulosehydrat, der auf der Innenseite eine Beschichtung zur Verbesserung der Abschälbarkeit aufweist. Die Hülle ist mit einem Faservlies verstärkt, das bevorzugt aus Hanffasem besteht. Die Herstellung der Wursthülle erfolgt in bekannter Weise, wobei das zum Schlauch geformte Vliesmaterial mit Viskose beschichtet wird und in üblichen säurehaltigen Fällbädern zu faserverstärktem Cellulosehydrat regeneriert wird. Das Aufbringen der Innenbeschichtung auf die Innenseite der Schlauchhülle erfolgt auf übliche Weise durch Einfüllen einer Beschichtungsflüssigkeit in die Cellulosehydrathülle zwischen Fällungsprozess und Trocknung.

In der Beschichtungsflüssigkeit sind erfindungsgemäß die genannten Wirkstoffkomponenten enthalten. Die Komponente Chromfettsäurekomplex ist eine Komplexverbindung von Fettsäuren mit 12 bis 18 Kohlenstoffatomen, z.B. Stearinsäure, mit Chromchlorid. Bevorzugt eingesetzt wird das Produkt ®Umbrellit S 30 der Fa. Münzing Chemie GmbH.

Die Komponente fettähnliches Diketen enthält langkettige (C10 - C 18) Fettsäuren, die besonders gut geeignet ist. Diese Diketene werden allgemein aus natürlich vorkommenden Fettsäuren hergestellt. Vorzugsweise werden Diketene verwendet, die 12 bis 16 Kohlenstoffatome enthalten. Besonders bevorzugt wird als Diketen-Komponente das Produkt Aquapel E6098 der Fa. Hercules eingesetzt.

Die Wirkstoffkomponente Polyamin-Polyamid-Epichlorhydrinharz ist ein handelsübliches Nassverfestigungsmittel, das auch in der Papierindustrie Anwendung findet und gesundheitlich unbedenklich ist gemäß Empfehlung 44, Kunstdärme, des Bundesinstitutes für gesundheitlichen Verbraucherschutz und Veterinärmedizin. Von den im Handel erhältlichen Typen wird bevorzugt ®Kymene SLX von Fa. Hercules eingesetzt.

Die Komponente Celluloseether ist bevorzugt eine Hydroxyethylcellulose, insbesondere die niedrigviskose Type ®Cellosize QP3L der Fa. Union Carbide.

Für die Erzielung des starken easy-peel Effektes soll das Gewichtsverhältnis der Komponenten Chromfettsäurekomplex und Diketen zur Komponente Polyamin-Polyamid-Epichlorhydrinharz (PPE) größer oder gleich 5:1 sein. Die Menge der aufgetragenen Beschichtung kann der Oberflächenrauhigkeit der Wursthüllen entsprechend variiert werden um eine gleichmäßige Beschichtung zu erhalten. Die Auftragsmenge beträgt 130 bis 1590 mg/m², bevorzugt 170 bis 1380 mg/m².

Ein weiterer Gegenstand der Erfindung ist die Verwendung der genannten Wursthüllen für die Herstellung von Brühwurst, Rohwurst und Kochschinken.

Aufgrund des starken easy-peel Effektes eignet sich die erfindungsgemäße Wursthülle für die Herstellung von mageren, eiweißreichen Wurstsorten wie Brühwurst und Kochschinken besonders.

### Beispiele

Die Erfindung wird durch die folgenden Beispiele näher erläutert.

Die Vergleichsbeispiele 1 bis 4 zeigen jeweils die Haftungswirkung, wenn eine der vier Komponenten des Anspruches 1 weggelassen werden, während Beispiel 1 den synergistischen Effekt bei kombinierter Anwendung der gesamtem vier Substanzen belegt.

Die Zahlenangaben der Substanzen stehen für die Grammangabe der eingesetzten Substanzen in der Imprägnierlösung. Der Chromfettsäurekomplex ®Umbrellit S30, Hersteller Münzing Chemie GmbH, hat einen Wirkstoffgehalt von 30 %, das Diketen ®Aquapel E 6098, Hersteller Fa. Hercules, enthält 21,7 % Wirkstoff, die Hydroxyethylcellulose ®Cellosize QP 3L, Hersteller Fa. Union Carbide, wird als Lösung mit einem Feststoffgehalt von 5 % eingesetzt und das Polyamin-Polyamid-Epichlorhydrinharz ®Kymene SLX, Hersteller Fa. Hercules, enthält 13 % Wirkstoff. Die hergestellten Wursthüllenmuster werden mit Brühwurst gefüllt und nach 2 Tagen hinsichtlich ihrer Schälbarkeit beurteilt. In einer Skala von 0 bis 5 zunehmender Haftung der Hülle an der Wurst erfolgt die Bewertung der Bräthaftung.

### Vergleichsbeispiele 1 bis 4:

Bei der kontinuierlichen Herstellung eines beidseitig viskosierten Faserdarms vom Nennkaliber 80 wurde die Innenoberfläche mit Imprägnierlösungen folgender Zusammensetzungen behandelt.

| **V1** | **V2** | **V3** | **V4** | **Substanzen in der Imprägnierlösung** |
|---|---|---|---|---|
| 3732 | 2930 | 2622 | 2530 | Wasser |
| 240 | 180 | 240 | - | ® Umbrellit S30 |
| 330 | 250 | - | 332 | ® Aquapel E 6098 |
| - | 1080 | 1440 | 1440 | ® Cellosize QP 3L |
| 138 | - | 138 | 138 | ® Kymene SLX |
| 560 | 560 | 560 | 560 | Glyzerin |
| 0,35 | 0,5 | 0,5 | 1,5 | **Bräthaftung** |

### Beispiel 1

Die Herstellung des Beispielmusters mit den vier Wirkstoffkomponenten erfolgte in gleicher Weise wie die Vergleichsbeispiele.

| | **Substanzen in der Imprägnierlösung** |
|---|---|
| 2947 | Wasser |
| 167 | ® Umbrellit S30 |
| 230 | ® Aquapel E 6098 |
| 1000 | ® Cellosize QP 3L |
| 96 | ® Kymene SLX |
| 560 | Glyzerin |
| 8:1 | **Verhältnis Umbrellit+Aquapel: Kymene** |
| 0,25 | **Bräthaftung** |

### Beispiele 2 bis 5

Bei der kontinuierlichen Herstellung eines beidseitig viskosierten Faserdarms vom Nennkaliber 65 wurde die Innenoberfläche mit Imprägnierlösungen mit allen vier Wirkstoffkomponenten gemäß Anspruch 1 folgender Zusammensetzungen behandelt.

| **2** | **3** | **4** | **5** | **Substanzen in der Imprägnierlösung** |
|---|---|---|---|---|
| 3486 | 2652 | 2979 | 2916 | Wasser |
| 167 | 200 | 250 | 83 | ® Umbrellit S30 |
| 345 | 92 | 115 | 345 | ® Aquapel E 6098 |
| 250 | 1400 | 1000 | 1000 | ® Cellosize QP 3L |
| 192 | 96 | 96 | 96 | ® Kymene SLX |
| 560 | 560 | 560 | 560 | Glyzerin |
| 5:1 | 6,4:1 | 8:1 | 8:1 | **Verhältnis Umbrellit+Aquapel : Kymene** |
| 0,25 | 0,5 | 0,25 | 0,5 | **Bräthaftung** |

## Patentansprüche

1. Schlauchförmige Wursthülle auf Basis von faserverstärktem Cellulosehydrat, die auf der inneren Oberfläche eine Beschichtung zur leichten Abtrennbarkeit von der Wurstmasse aufweist, enthaltend vier Wirkstoffkomponenten, **dadurch gekennzeichnet, dass** die Komponenten ein Chromfettsäurekomplex, ein fettähnliches Diketen, ein Polyamin-Polyamid-Epichlorhydrinharz und ein Celluloseether sind.

2. Wursthülle nach Anspruch 1, **dadurch gekennzeichnet, dass** das Gewichtsverhältnis der Komponenten Chromfettsäurekomplex und Diketen zur Komponente Polyamin-Polyamid-Epichlorhydrinharz größer oder gleich 5:1 ist.

3. Wursthülle nach den Ansprüchen 1 und 2, **dadurch gekennzeichnet, dass** der Celluloseether Hydroxyethylcellulose ist.

4. Wursthülle nach den Ansprüchen 1 bis 3, **dadurch gekennzeichnet, dass** die Gesamtmenge der aufgetragenen Innenbeschichtung 130 bis 1590 mg/m², besonders bevorzugt 170 bis 1380 mg/m² beträgt.

5. Verwendung der Wursthülle nach den Ansprüchen 1 bis 4 für die Herstellung von Brühwurst, Rohwurst und Kochschinken.

## Claims

1. Fibre-reinforced cellulose-hydrate-based tubular sausage casing, which on the inner surface, for easy peelability from the sausage mixture, has a coating comprising four active components, **characterized in that** the components are a chromium-fatty acid complex, a fatty diketene, a polyamine-polyamide-epichlorohydrin resin and a cellulose ether.

2. Sausage casing according to Claim 1, **characterized in that** the weight ratio of the components chromium-fatty acid complex and diketene to the component polyamine-polyamide-epichlorohydrin resin is greater than or equal to 5:1.

3. Sausage casing according to Claims 1 and 2, **characterized in that** the cellulose ether is hydroxyethyl cellulose.

4. Sausage casing according to Claims 1 to 3, **characterized in that** the total amount of internal coating applied is 130 to 1 590 mg/m², particularly preferably 170 to 1 380 mg/m².

5. Use of the sausage casing according to Claims 1 to 4 for producing scalded-meat emulsion sausage, raw sausage and cooked ham.

## Revendications

1. Boyau de saucisse en forme de tube à base d'hydrate de cellulose renforcé de fibres qui présente sur la surface interne un revêtement destiné à faciliter la séparation de la masse de saucisse, contenant quatre constituants de matières actives, **caractérisé en ce que** les constituants sont un complexe d'acide gras du chrome, un dicétène semblable à une graisse, une résine de polyamine-polyamide-épichlorhydrine et un éther de cellulose.

2. Boyau de saucisse selon la revendication 1, **caractérisé en ce que** le rapport massique des constituants complexe d'acide gras du chrome et dicétène au constituant résine de polyamine-polyamide-épichlorhydrine est supérieur ou égal à 5:1.

3. Boyau de saucisse selon les revendications 1 et 2, **caractérisé en ce que** l'éther de cellulose est l'hydroxyéthylcellulose.

4. Boyau de saucisse selon les revendications 1 à 3, **caractérisé en ce que** la quantité totale du revêtement interne appliqué est de 130 à 1590 mg/m², encore mieux de 170 à 1380 mg/m².

5. Utilisation du boyau de saucisse selon les revendications 1 à 4 pour la préparation de saucisse pour bouillon, de saucisse crue et de jambon à cuire.
